# EUROPEAN PATENT SPECIFICATION

(11) **EP 3 725 842 B1**
(45) Date of publication and mention of the grant of the patent: **26.03.2025**
(21) Application number: 18889071.9
(22) Date of filing: 25.09.2018
(51) Int. Cl.: C08L 23/08, B60K 37/00, B60R 13/02, C08K 5/14, C08L 23/10, C08L 23/16, C08L 25/04, C08L 53/02

(54) **POLYMER COMPOSITION AND USE THEREOF**
POLYMERZUSAMMENSETZUNG UND VERWENDUNG DAVON
COMPOSITION DE POLYMÈRE ET SON UTILISATION

(30) Priority: 11.12.2017 JP 2017237039
(43) Date of publication of application: 21.10.2020
(73) Proprietor: Mitsui Chemicals, Inc., Tokyo 104-0028 (JP)
(72) Inventor: TAKAYAMA Nana, Sodegaura-shi, Chiba 299-0265 (JP); KURITA Hayato, Sodegaura-shi, Chiba 299-0265 (JP); YAMAGUCHI Tomohiro, Tokyo 105-7122 (JP); YODA Yusuke, Sodegaura-shi, Chiba 299-0265 (JP)
(74) Representative: Hoffmann Eitle
(86) International application number: PCT/JP2018/035267
(87) International publication number: WO 2019/116669

(56) References cited:
- EP-A1- 3 162 847
- WO-A1-2005/090466
- JP-A- 2003 176 397
- JP-A- 2007 031 544
- JP-A- 2007 204 676
- JP-A- 2012 107 261
- JP-A- 2014 080 488
- JP-A- H0 994 926
- JP-A- H10 324 200
- KR-A- 20080 069 364
- US-A1- 2007 083 007

## Description

### Technical Field

The present invention relates to a polymer composition and use thereof.

### Background Art

Thermoplastic elastomers are light in weight and easily recyclable. Thus, thermoplastic elastomers are extensively used as energy-saving and resource-saving elastomers, and, in particular, as alternatives to vulcanized rubber or vinyl chloride resin, for automobile parts, industrial machinery parts, electric/electronic parts, and constructional materials.

In particular, an olefin-based thermoplastic elastomer comprises, as starting materials, an ethylene-propylene-non-conjugated diene copolymer (EPDM) and a crystalline polyolefin such as polypropylene. Thus, the specific gravity thereof is lower, and its durability in terms of heat aging resistance, weather resistance, and the like is superior to those of other types of thermoplastic elastomers.

For a thermoplastic elastomer used for skin members of automobile interior parts, soft touch as well as excellent oil resistance are required.

However, softness and oil resistance are properties inconsistent with each other, and thus a thermoplastic elastomer having both softness and oil resistance has not been reported.

A thermoplastic elastomer composition having softness and comprising an olefin-based thermoplastic elastomer together with a styrene-based thermoplastic elastomer has been reported (e.g., Patent Literature 1 and Patent Literature 2).

Patent Literature 1 discloses that a thermoplastic elastomer composition for foaming injection molding comprising a thermoplastic elastomer (II), an ethylene-α-olefin copolymer and a styrene-based thermoplastic elastomer combines fluidity, foamability and softness, and thus can be suitably used for automobile interior parts etc., wherein the thermoplastic elastomer (II) is formed by adding a specific polypropylene resin, a specific propylene-α-olefin copolymer rubber and a softening agent to an olefin-based thermoplastic elastomer (I) formed by dynamically heat-treating a mixture comprising a specific polypropylene resin, ethylene-based copolymer rubber and a softening agent (e.g., abstract, paragraph 0064).

Patent Literature 2 discloses that a thermoplastic elastomer composition comprising a specific olefin-based thermoplastic elastomer and a specific styrene-based thermoplastic elastomer and having a type A hardness (i.e., the instantaneous value) of 55 or less in accordance with JIS K6253 combines softness and formability (foaming injection), and can be used for automobile parts such as automobile interior parts and automobile exterior parts (e.g., claim 1, paragraph 0096).

Both of Patent Literatures 1 and 2 do not mention oil resistance. Additional patent literature does not disclose softness and oil resistance or the present claimed composition either:
EP 3 162 847 A1 relates to a thermoplastic elastomer composition and a molded article manufactured therefrom. The thermoplastic elastomer composition comprises:
   10 to 85 wt% of olefinic rubber;
   5 to 50 wt% of one or more styrene-based block copolymer having a melt flow index of 0.8 to 1.2 g/10 min (200 °C, 2.16 kg), and selected from the group consisting of a styrene-butylene-styrene block copolymer and a styrene-ethylene/butylene-styrene block copolymer;
   0.1 to 50 wt% of an oil;
   1 to 50 wt% of high melt strength polypropylene having a thermal deflection temperature of 120 to 135 °C under a load of 4.6 kgf/cm² and elongation viscosity of 1.0×10⁵ to 1.0×10⁷ poise;
   0.1 to 15 wt% of an inorganic filler; and
   0.1 to 10 wt% of a cross-linking agent.
US 2007/083007 A1 relates to formed profiles comprising microcellular TPE foam compositions, and articles therefrom, wherein the TPE are thermoplastic vulcanizates. The foamed thermoplastic elastomer profile comprises a foamable thermoplastic elastomer composition having a) a cross-linkable hydrocarbon rubber in the presence of b) a thermoplastic polyolefin resin having a Tm greater than 120° C. wherein said composition further comprising: a) 25 to 30 wt % of a partially or fully vulcanized reaction product of said cross-linkable hydrocarbon rubber with a cross-linking agent, said reaction product being present as a dispersed phase; b) 7 to 12 wt % of said thermoplastic resin as a continuous phase; c) 8-22 wt % of an elastomeric thermoplastic modifier comprising 1) 3-7 wt. % copolymers of propylene with one or more of ethylene and C₄-C₁₀ alpha-olefins, said copolymers having a Tm greater than 20° C. and less than 120° C., and, 2) 5-15 wt. % hydrogenated, triblock styrenic copolymers from styrene and isoprene; and, optionally, d) 3-12 wt. % solid filler; and/or e) 35-45 wt. % of non-aromatic hydrocarbon oil; wherein said wt. % amounts are based upon the total weight of the composition, and where the composition has been prepared by a process comprising dynamically vulcanizing said composition.
KR 2008 0069364 A relates to an olefin-based thermoplastic resin composition comprising 100 parts by weight of base resin composition comprising (A) 5-50 wt% of polypropylene resin, (B) 5-50 wt% of a thermoplastic elastomer, (C) 10-60 wt% of processing oil and (D) 1-30 wt% of an organic filler, and further (E) 0.02-5 parts by weight of an organic peroxide-based crosslinking agent,(F) 0.1-5 parts by weight of a crosslinking aid, and (G) 0.01-5 parts by weight of scratch resistance additives.
JP 2007 204676 A relates to a thermoplastic elastomer composition that can be produced by dynamic cross-linking a mixture containing 10-35 mass% of a thermoplastic polymer, a non-crosslinked rubber and 10-40 mass% of a liquid polymer having a dynamic viscosity of 1,000-200,000 mm²/s at 40°C and a cross-linking agent, and further 15 mass% or less of an oil and/or a plasticizer.

### Citation List

### Patent Literature

Patent Literature 1: JP Patent Publication (Kokai) No. 2002-206034 A
Patent Literature 2: WO 2016/039310

### Summary of Invention

### Technical Problem

An object of the present invention is to provide a polymer composition which enables to manufacture skin members of automobile interior parts having both softness and oil resistance.

### Solution to Problem

Summary of the present invention is as follows.
(1) A composition comprising 20 to 60 parts by mass of a component derived from an ethylene-based copolymer rubber (A), 5 to 14 parts by mass of a component derived from a polypropylene resin (B), 5 to 12 parts by mass of a component derived from a styrene-based thermoplastic elastomer (C) and 5 to 70 parts by mass of a component derived from a softening agent (D) (with the total amount of the components (A), (B), (C) and (D) being 100 parts by mass), wherein a mass ratio of the component derived from the styrene-based thermoplastic elastomer (C) to the component derived from the softening agent (D) ((C)/(D)) is 0.01 to 1, and at least the component derived from the ethylene-based copolymer rubber (A) and the component derived from the styrene-based thermoplastic elastomer (C) are crosslinked by a crosslinking agent (E) comprising an organic peroxide.
(2) A skin member of an automobile interior part, comprising the composition of the invention.
(3) An automobile interior part having the skin member.

### Advantageous Effects of Invention

Since the composition of the present invention has both soft touch and excellent oil resistance, it is suitable for use for a skin member of an automobile interior part. Therefore, the skin member of the automobile interior part, and the automobile interior part according to the present invention have both soft touch and excellent oil resistance. Herein, both soft touch and softness represent low hardness.

### Description of Embodiments

The composition of the present invention contains at least a component derived from an ethylene-based copolymer rubber (A), a component derived from a polypropylene resin (B), a component derived from a styrene-based thermoplastic elastomer (C) and a component derived from a softening agent (D).

In the present invention, "a component derived from an ethylene-based copolymer rubber", "a component derived from a polypropylene resin", "a component derived from a styrene-based thermoplastic elastomer" and "a component derived from a softening agent" refer to components obtained from an ethylene-based copolymer rubber, a polypropylene resin, a styrene-based thermoplastic elastomer and a softening agent respectively as starting materials.

### [Ethylene-based copolymer rubber (A)]

The ethylene-based copolymer rubber (A) used in the present invention is an elastic copolymer rubber containing ethylene and an α-olefin having 3 to 20 carbon atoms as main components, and preferably an amorphous elastic random copolymer rubber comprising ethylene and an α-olefin having 3 to 20 carbon atoms, and amorphous elastic random copolymer rubber comprising ethylene, an α-olefin having 3 to 20 carbon atoms and a non-conjugated polyene can be exemplified.

Examples of the above α-olefin include, for example, propylene, 1-butene, 1-pentene, 1-hexene, 1-octene, 1-decene, 2-methyl-1-propene, 3-methyl-1-pentene, 4-methyl-1-pentene, 5-methyl-1-hexene. These α-olefins are used singly or as a mixture of two or more.

The molar ratio of ethylene to an α-olefin having 3 to 20 carbon atoms in the ethylene-based copolymer rubber (A) is usually 55/45 to 85/15, preferably 60/40 to 83/17.

Examples of the above non-conjugated polyene include, for example, cyclic dienens such as dicyclopentadiene, cyclooctadiene, methylenenorbornene (for example, 5-methylene-2-norbornene), ethylidenenorbornene (for example, 5-ethylidene-2-norbornene), methyltetrahydroindene, 5-vinyl-2-norbornene, 5-isopropylidene-2-norbornene, 6-chloromethyl-5-isopropenyl-2-norbornene and norbornadiene; chain dienes such as 1,4-hexadiene, 3-methyl-1,4-hexadiene, 4-methyl-1,4-hexadiene, 5-methyl-1,4-hexadiene, 4,5-dimethyl-1,4-hexadiene, 6-methyl-1,6-octadiene, 7-methyl-1,6-octadiene, 6-ethyl-1,6-octadiene, 6-propyl-1,6-octadiene, 6-butyl-1,6-octadiene, 6-methyl-1,6-nonadiene, 7-methyl-1,6-nonadiene, 6-ethyl-1,6-nonadiene, 7-ethyl-1,6-nonadiene, 6-methyl-1,6-decadiene, 7-methyl-1,6-decadiene, 6-methyl-1,6-undecadiene and 7-methyl-1,6-octadiene; trienes such as 2,3-diisopropylidene-5-norbornene and 2-ethylidene-3-isopropylidene-5-norbornene. Among these non-conjugated polyenes, 5-ethylidene-2-norbornene, dicyclopentadiene and 1,4-hexadiene etc. are preferable, and 5-ethylidene-2-norbornene is further preferable.

As the ethylene-based copolymer rubber (A), ethylene-propylene-non-conjugated diene copolymer rubber and ethylene-1-butene-non-conjugated diene copolymer rubber are preferable. Ethylene-propylene-non-conjugated diene copolymer rubber, especially ethylene-propylene-5-ethylidene-2-norbornene copolymer rubber is particularly preferable since it provides a thermoplastic elastomer having an appropriate crosslinked structure.

The Mooney viscosity [ML₁₊₄ (125°C)] of the ethylene-based copolymer rubber (A) is usually 35 to 300, preferably 40 to 160.

The ethylene-based copolymer rubber (A) used in the present invention may be a so-called oil-extended rubber to which a softening agent, preferably a mineral oil-based softening agent is added during manufacture of the rubber. Examples of mineral oil-based softening agents include conventionally known mineral oil-based softening agents, for example paraffin-based process oil.

The iodine value of the ethylene-based copolymer rubber (A) is usually 3 to 30, preferably 5 to 25. When the iodine value of the ethylene-based copolymer rubber (A) is within such a range, a thermoplastic elastomer composition having an appropriately crosslinked structure and having excellent formability and rubber elasticity can be obtained.

The amount of the ethylene-based copolymer rubber (A) to be added is 20 to 60 parts by mass, preferably 30 to 50 parts by mass, further preferably 30 to 45 parts by mass, based on 100 parts by mass of total amount of the ethylene-based copolymer rubber (A), the polypropylene resin (B), the styrene-based thermoplastic elastomer (C) and the softening agent (D). This range would provide excellent softness.

### [Polypropylene resin (B)]

The polypropylene resin (B) used in the present invention comprises a high molecular weight solid product obtained by polymerizing propylene alone, or polymerizing propylene with other one or two or more monoolefins by a high pressure process or low pressure process.

Examples of suitable starting material olefins for the polypropylene resin (B) other than propylene include preferably α-olefins having 2 or 4 to 20 carbon atoms, for example, ethylene, 1-butene, 1-pentene, 1-hexene, 1-octene, 1-decene, 2-methyl-1-propene, 3-methyl-1-pentene, 4-methyl-1-pentene, 5-methyl-1-hexene. The form of polymerization may be random type or block type as long as a resinous product can be obtained. These polypropylene resins can be used singly or in combinations of two or more.

The polypropylene resin (B) used in the present invention is preferably a propylene-based polymer having a propylene content of 40 mol% or more, further preferably a propylene-based polymer having a propylene content of 50 mol% or more.

Among these polypropylene resins, propylene homopolymer, propylene-ethylene block copolymer, propylene-ethylene random copolymer, propylene-ethylene-butene random copolymer etc. are particularly preferable.

The polypropylene resin (B) used in the present invention usually has a melting point within a range of 80 to 170°C, preferably within a range of 120 to 170°C.

The polypropylene resin (B) used in the present invention usually has MFR (ASTM D1238-65T, 230°C, 2.16 kg load) within a range of 0.01 to 100 g/10 min, preferably in particular 0.05 to 50 g/10 min.

The conformation of the polypropylene resin (B) used in the present invention is preferably isotactic structure, however, those having syndiotactic structure or mixture of these structures, or those comprising atactic structure in part can be also used.

The polypropylene resin (B) used in the present invention is polymerized by various known polymerization methods.

The amount of the polypropylene resin (B) to be added is 5 to 14 parts by mass based on 100 parts by mass of total amount of the ethylene-based copolymer rubber (A), the polypropylene resin (B), the styrene-based thermoplastic elastomer (C) and the softening agent (D). This range would provide particularly excellent balance between softness and oil resistance.

### [Styrene-based thermoplastic elastomer (C)]

Examples of the styrene-based thermoplastic elastomer (C) used in the present invention include, for example, styrene-isoprene block copolymers, hydrogenated products of styrene-isoprene block copolymers (SEP), hydrogenated products of styrene-isoprene-styrene block copolymers (SEPS; polystyrene-polyethylene/propylene-polystyrene block copolymers), styrene-butadiene copolymers, styrene-butadiene block copolymers and hydrogenated products of styrene-butadiene block copolymers (SEBS; polystyrene-polyethylene/butylene-polystyrene block copolymers). More specific examples include Septon (manufactured by Kuraray Co., Ltd.), EARNESTON (manufactured by Kuraray Plastics Co., Ltd.), HYBRAR (manufactured by Kuraray Co., Ltd.), KRATON and KRATON G (manufactured by Kraton Polymer), Europrene SOLT (manufactured by Versalis S.p.a.), JSR-TR and JSR-SIS (manufactured by JSR Corporation), Quintac (manufactured by Zeon Corporation), and Tuftec (manufactured by Asahi Kasei Corporation) (tradenames).

Especially, it is preferable that the styrene-based thermoplastic elastomer (C) is one or more selected from block copolymers of styrene with one or more conjugated dienes selected from butadiene and isoprene and hydrogenated products thereof, in terms of oil resistance of the composition. It is particularly preferable that the component (C) is one or more selected from styrene-isoprene block copolymers, hydrogenated products of styrene-isoprene block copolymers, hydrogenated products of styrene-isoprene-styrene block copolymers, styrene-butadiene block copolymers and hydrogenated products of styrene-butadiene block copolymers.

The styrene-based thermoplastic elastomer (C) used in the present invention usually has the type A hardness (i.e., the instantaneous value) of 30 to 96, preferably 35 to 69 in accordance with JIS K6253.

The styrene-based thermoplastic elastomer (C) used in the present invention usually has the styrene content of 10 to 70 mass%, preferably 20 to 50 mass%.

The amount of the styrene-based thermoplastic elastomer (C) to be added is 5 to 12 parts by mass, preferably 5 to 11 parts by mass, particularly preferably 5 to 10 parts by mass based on 100 parts by mass of total amount of the ethylene-based copolymer rubber (A), the polypropylene resin (B), the styrene-based thermoplastic elastomer (C) and the softening agent (D). When the above amount of the styrene-based thermoplastic elastomer (C) to be added is 5 to 12 parts by mass, good oil resistance, weight change rate and softness are achieved, and in addition, good formability in vacuum forming etc. (in particular grain retention ability) is also achieved since heat resistance is not reduced. When the upper limit of the above amount of the styrene-based thermoplastic elastomer (C) to be added is 10 parts by mass or less, heat resistance is not reduced, and more excellent vacuum formability (i.e., grain retention ability) and releasability from a roll are achieved as well as good oil resistance.

The styrene-based thermoplastic elastomer (C) may be a so-called oil-extended product to which a softening agent, preferably a mineral oil-based softening agent has been added. Exampled of mineral oil-based softening agents include conventionally known mineral oil-based softening agents, for example a paraffin-based process oil.

### [Softening agent (D)]

The softening agent is previously added during mixing of the ethylene-based copolymer rubber (A), the polypropylene resin (B) and the styrene-based thermoplastic elastomer (C) or mixing of the ethylene-based copolymer rubber (A) and the polypropylene resin (B), or the softening agent is added according to a method in which the softening agent is injected during dynamical crosslinking of the mixture. In that case, the softening agent is added using the above method alone or combination of the above methods.

Examples of softening agents used in the present invention, for example, petroleum-based softening agents such as process oil, lubricating oil, paraffin, liquid paraffin, polyethylene wax, polypropylene wax, petroleum asphalt and vaseline; coal tar-based softening agents such as coal tar and coal tar pitch; fatty oil-based softening agents such as castor oil, linseed oil, rapeseed oil, soybean oil and coconut oil; tall oil; sub, (factice); waxes such as beeswax, carnauba wax and lanolin; fatty acids and fatty acid salts such as ricinoleic acid, palmitic acid, stearic acid, barium stearate, calcium stearate and zinc laurate; naphthenic acid; pine oil, rosin or derivatives thereof; synthetic polymer substances such as terpene resin, petroleum resin, coumarone-indene resin and atactic polypropylene; ester-based softening agents such as dioctyl phthalate, dioctyl adipate and dioctyl sebacate; microcrystalline wax, liquid polybutadiene, modified liquid polybutadiene, liquid polyisoprene, terminal-modified polyisoprene, hydrogenated terminal-modified polyisoprene, liquid thiokol, hydrocarbonbased synthetic lubricating oil. Among these, petroleum-based softening agents, in particular process oil is preferably used.

The amount of the softening agent (D) to be added is 5 to 70 parts by mass, preferably 30 to 55 parts by mass, further preferably 41 to 55 parts by mass based on 100 parts by mass of total amount of the ethylene-based copolymer rubber (A), the polypropylene resin (B), the styrene-based thermoplastic elastomer (C) and the softening agent (D). When the above amount of the softening agent (D) to be added is less than 5 parts by mass, oil resistance and weight change rate get worse. On the other hand, when the above amount of the softening agent (D) to be added is more than 70 parts by mass, heat resistance is reduced and thus formability in vacuum forming etc. (in particular grain retention ability) get worse.

In the composition of the present invention, the mass ratio of the styrene-based thermoplastic elastomer (C) to the softening agent (D) ((C)/(D)) is 0.01 to 1, preferably 0.02 to 0.9, further preferably 0.03 to 0.7, more preferably 0.05 to 0.5, particularly preferably 0.07 to 0.3, most preferably 0.1 to 0.3, in terms of oil resistance, heat resistance and roll processability.

### [Crosslinking agent]

Examples of the crosslinking agents used in the present invention include, for example, organic peroxides, sulfur, sulfur compounds and phenol-based vulcanizing agents such as phenol resin. Among these, an organic peroxide is preferably used because of a hue of a formed product, excellent mechanical strength such as elongation at break in a tensile test of a resin, excellent formability due to being easily elongated during secondary processing of a formed product (formability is also related to the above-mentioned excellent elongation at break in a tensile test to some extent), and formability in vacuum forming, in particular corner transferability. As the crosslinking agent (E), an organic peroxide alone is more preferably used in terms of a hue of a formed product, mechanical strength and formability (in particular vacuum formability such as corner transferability). Even when an organic peroxide alone is used as a crosslinking agent, a crosslinking aid described below or a polyfunctional vinyl monomer may be used.

Examples of the above organic peroxides include, for example, dicumyl peroxide, ditert-butyl peroxide, 2,5-dimethyl-2,5-di-(tert-butylperoxy)hexane, 2,5-dimethyl-2,5-di-(tert-butylperoxy)hexyne-3, 1,3-bis(tert-butylperoxyisopropyl)benzene, 1,1-bis(tert-butylperoxy)-3,3,5-trimethylcyclohexane, n-butyl 4,4-bis(tert-butylperoxy)valerate, benzoyl peroxide, p-chlorobenzoyl peroxide, 2,4-dichlorobenzoyl peroxide, tert-butyl peroxybenzoate, tert-butylperoxy isopropyl carbonate, diacetyl peroxide, lauroyl peroxide and tert-butyl cumyl peroxide.

Among these, 2,5-dimethyl-2,5-di-(tert-butylperoxy)hexane, 2,5-dimethyl-2,5-di-(tert-butylperoxy)hexyne-3, 1,3-bis(tert-butylperoxyisopropyl)benzene, 1,1-bis(tert-butylperoxy)-3,3,5-trimethylcyclohexane and n-butyl 4,4-bis(tert-butylperoxy)valerate are preferable in terms of odor and scorch stability, and especially, 2,5-dimethyl-2,5-di-(tert-butylperoxy)hexane and 1,3-bis(tert-butylperoxyisopropyl)benzene are most preferable.

An organic peroxide is used usually in the proportion of 0.01 to 5 parts by mass, preferably 0.05 to 3 parts by mass, more preferably 0.05 to 1 parts by mass based on 100 parts by mass of total amount of the ethylene-based copolymer rubber (A), the polypropylene resin (B), the styrene-based thermoplastic elastomer (C) and the softening agent (D). Furthermore, 0.01 to 2 parts by mass of organic peroxide is preferably used based on 100 parts by mass of the ethylene-based copolymer rubber (A) used as a starting material, in terms of softness and oil resistance. The upper limit of the amount of the organic peroxide to be added is preferably 1.9 parts by mass, more preferably 1.6 parts by mass, further preferably 1.5 parts by mass, particularly preferably 1.4 parts by mass, ant the lower limit of the amount or the organic peroxide to be added is preferably 0.02 parts by mass, more preferably 0.05 parts by mass.

When crosslinking treatment is conducted using the above organic peroxide, crosslinking aids such as sulfur, p-quinone dioxime, p,p'-dibenzoylquinone dioxime, N-methyl-N,4-dinitrosoaniline, nitrosobenzene, diphenylguanidine, trimethylolpropane, N,N'-m-phenylenedimaleimide, divinylbenzene, triallyl cyanurate and triallyl isocyanurate, or polyfunctional methacrylate monomers such as ethylene glycol dimethacrylate, diethylene glycol dimethacrylate, polyethylene glycol dimethacrylate, trimethylolpropane trimethacrylate and allyl methacrylate, or polyfunctional vinyl monomers such as vinyl butylate and vinyl stearate can be added.

When the compounds as described above are used, uniform and mild crosslinking reaction can be expected. In particular, in the present invention, divinylbenzene is most preferable. Divinylbenzene is easy to handle, has good compatibility with the ethylene-based copolymer rubber (A) and the polypropylene resin (B) which are main components of the crosslinking treatment, has a function to solubilize the organic peroxide and serves as a dispersing agent of the organic peroxide, and thus a resin composition which provides uniform crosslinking effect by heat treatment and is well-balanced between fluidity and physical properties can be obtained.

The above crosslinking aid is used usually in the proportion of 0.01 to 15 parts by mass, preferably 0.03 to 12 parts by mass based on 100 parts by mass of total amount of the ethylene-based copolymer rubber (A), the polypropylene resin (B), the styrene-based thermoplastic elastomer (C) and the softening agent (D).

### [Other additives]

In the composition of the present invention, the component derived from the ethylene-based copolymer rubber (A), the component derived from the polypropylene resin (B), the component derived from the styrene-based thermoplastic elastomer (C) and the component derived from the softening agent (D) may be present in the amount described above, however, other polymers, for example butyl rubber, polyisobutylene rubber, nitrile rubber (NBR), natural rubber (NR) and silicone rubber may be added in an amount within a range not inhibiting achievement of the purpose of the present invention.

In the case of using other polymers, the amount of the polymers to be added is usually 0.1 to 50 parts by mass, preferably 5 to 40 parts by mass based on 100 parts by mass of the above component (A).

To the composition of the present invention, if necessary, additives such as a slipping agent, nucleating agent, filler, anti-oxidant, weathering stabilizer and colorant can be added in an amount within a range not inhibiting achievement of the purpose of the present invention. The total amount of these other additives is usually 0.01 to 20 parts by mass, preferably 0.1 to 10 parts by mass, further preferably 0.1 to 5 parts by mass based on 100 parts by mass of the total amount of the above components (A) to (D). The amount of a filler is usually 1 to 50 parts by mass, preferably 1 to 45 parts by mass, further preferably 1 to 40 parts by mass based on 100 parts by mass of the above components (A).

Examples of the above nucleating agents include crystallization nucleating agents of non-melting type and melting type, which may be used singly or in combinations of two or more. Examples of non-melting type crystallization nucleating agents include inorganic substances such as talc, mica, silica and aluminum, brominated biphenyl ether, aluminum hydroxy-di-p-tert-butylbenzoate (TBBA), organic phosphate salt, rosin-based crystallization nucleating agent, substituted triethylene glycol terephthalate and Terylene & Nylon fiber, and in particular, aluminum hydroxy-di-p-tert-butylbenzoate, sodium methylene bis(2,4-di-tert-butylphenyl)phosphate, sodium 2,2'-methylene bis(4,6-di-tert-butylphenyl)phosphate and rosin-based crystallization nucleating agent are desirable. Examples of melting type crystallization nucleating agents include sorbitol-based compounds such as dibenzylidene sorbitol (DBS), substituted DBS and lower alkyl dibenzylidene sorbitol (PDTS).

Examples of the above slipping agents include, for example, fatty acid amide, silicone oil, glycerol, wax, paraffin-based oil.

Examples of the above fillers include conventionally known fillers, for example, one or more selected from carbon black, calcium carbonate, calcium silicate, clay, kaoline, talc, silica, diatomaceous earth, mica powder, asbestos, alumina, barium sulfate, aluminum sulfate, calcium sulfate, basic magnesium carbonate, molybdenum disulfide, graphite, glass fiber, glass sphere, shirasu balloon, basic magnesium sulfate whisker, calcium titanate whisker and aluminum borate whisker.

### [Manufacturing method of the composition of the present invention]

Preferably, the composition of the present invention is obtained by dynamically crosslinking a mixture comprising the ethylene-based copolymer rubber (A), the polypropylene resin (B), the styrene-based thermoplastic elastomer (C), the softening agent (D) and, if necessary, a specified amount of an optional component. When dynamic crosslinking is conducted, dynamic heat treatment is preferably conducted in the presence of the above cross-linking agent, or in the presence of the above cross-linking agent and the above crosslinking aid. When the component (C) is cross-linked as in the preferable aspect, excellent oil resistance is obtained.

Furthermore, the whole amount of the component (A) and the component (C) respectively as starting materials are preferably heat-treated dynamically in the presence of a crosslinking agent or in the presence of the above crosslinking agent and the above crosslinking aid. At least a part of the component (B) and the component (D) respectively are preferably heat-treated dynamically in the presence of a crosslinking agent or in the presence of the above crosslinking agent and the above cross-linking aid, and more preferably, the whole amount the component (B) and the component (D) respectively are heat-treated dynamically in the presence of the crosslinking agent.

Crosslinking is preferably conducted by dynamic heat treatment in the presence of 0.01 to 2 parts by mass of an organic peroxide based on 100 parts by mass of the ethylene-based copolymer rubber (A).

Herein, "dynamically heat-treating" means kneading in the molten state.

Dynamic heat treatment in the present invention is preferably conducted in a non-open type apparatus, and preferably conducted under an inert gas atmosphere such as nitrogen and carbon dioxide gas. The temperature of heat treatment is within the range between the melting point of the polypropylene resin (B) and 300°C, usually 150 to 270°C, preferably 170°C to 250°C. Kneading time is usually 1 to 20 minutes, preferably 1 to 10 minutes. The shearing force to be applied is within a range of 10 to 50,000 sec⁻¹, preferably 100 to 10,000 sec⁻¹ expressed as shear rate.

The composition of the present invention is suitable to be used for in particular solid forming, and usually a foaming agent etc. is not used.

As a kneading apparatus, a mixing roll, intensive mixer (for example Banbury mixer, kneader), single-screw or twin-screw extruder etc. can be used, however, a non-open type apparatus is preferable.

According to the present invention, a resin composition in which at least a part of the ethylene-based copolymer rubber (A) is cross-linked can be obtained by the above-mentioned dynamic heat treatment.

### [Composition of the present invention]

The melt flow rate (MFR) of the composition of the present invention measured at 230°C under a load of 10 kgf or 2.16 kgf in accordance with JIS K7210 is not particularly limited, however, in terms of compatibility between corner transferability and grain retention ability in vacuum forming, the MFR measured at 230°C under a load of 10 kgf is preferably 0.1 to 150 g/10 min, further preferably 0.1 to 80 g/10 min.

The composition of the present invention usually has Shore A hardness (i.e., the instantaneous value) of 30 to 60, preferably 40 to 54 as measured in accordance with JIS K6253.

The composition of the present invention can be made into a formed product of a thermoplastic elastomer by various known forming methods, specifically, for example by various forming methods such as injection molding, extrusion molding, press-forming, calender molding and hollow molding. Furthermore, a formed product such as a sheet obtained by the above forming methods can be subjected to secondary processing by thermoforming etc. The composition of the present invention provides excellent sharpness of the shape of a corner when a sheet made thereof is vacuum formed into a shape having a corner part during thermoforming. Examples of a shape having a corner part include, for example, a shape of a skin member of an automobile instrument panel or a skin member of an automobile door trim. Also, when the sheet is provided with a grain and then subjected to thermoforming, the sheet has excellent retention ability of grain after thermoforming. As the reason why the composition of the present invention has the above-mentioned excellent corner transferability and grain retention ability, it can be mentioned that the composition of the present invention has heat resistance. In the present invention, excellent vacuum formability may mean that both or one of the above corner transferability and grain retention ability are excellent.

The above composition has both soft touch and excellent oil resistance, and thus most suitable for a skin member for an automobile interior parts, for example a skin member for an automobile instrument panel and a skin member for an automobile door trim.

The present specification encompasses the content described in the specification and drawings of JP 2017-237039 which is the basis of priority of the present application.

### Examples

Hereinafter, the present invention will be described with reference to Examples, however, the present invention is not limited to these Examples by any means. The methods of measurement and evaluation of physical properties conducted in Examples and Comparative Examples are as follows.

### [Shore A hardness]

The Shore A hardness (i.e., the instantaneous value) was obtained in accordance with JIS K6253 (test method for hardness) using a press sheet having 2 mm thickness and a durometer.

### [Melting point (Tm) of polypropylene resin (B)]

The Melting point was measured by the following method in accordance with JIS K7121 using a differential scanning calorimetry (DSC).

About 5 mg of a polymer was put in an aluminum pan for measurement in a differential scanning calorimetry (DSC220C) manufactured by Seiko Instruments Inc., and the aluminum pan was sealed, then the polymer was heated from room temperature to 200°C at 10°C/min. The polymer was maintained at 200°C for 5 minutes to be completely melted, then cooled to - 50°C at 10°C/min. After maintaining the polymer at -50°C for 5 minutes, second heating was conducted to 200°C at 10°C/min, and the peak temperature (°C) during the second heating was determined as the melting point (Tm) of the polymer. When a plurality of peaks were detected, the peak detected at highest temperature was adopted.

### [Tensile property]

The tensile properties were measured in accordance with JIS K6251.
Test strips made by stamping out dumbbell No.3 strips from a press sheet having 2 mm thickness were used. Measurement temperature: 23°C
M₁₀₀: Stress at 100% elongation (MPa)
T_{B}: Tensile strength (MPa)
E_{B}: Elongation at break (%)

### [Oil resistance test: weight change rate]

A liquid paraffin (soft) (manufactured by NAKALAI TESQUE, INC., code No.: 26132-35) was used as test oil, and a press sheet having 2 mm thickness was immersed in the oil at 80°C for 24 hours. Then, the surface of the sample was wiped and weight change rates were measured at n = 3.

### (Evaluation criteria of oil resistance)

Excellent: weight change rate is 110 or less.
Good: weight change rate is more than 110 and 130 or less.
Moderate: weight change rate is more than 130 and 150 or less.
Poor: weight change rate is more than 150.

### [Softness]

The hardness of a thermoplastic elastomer can be represented by Shore A hardness. A higher value of Shore A hardness means that the material is harder, and a lower value means that the material is softer and has good softness. The evaluation criteria of softness in the present specification are shown below.

### (Evaluation criteria of softness)

Excellent: Shore A hardness is 45 or less.
Good: Shore A hardness is 46 to 54
Moderate: Shore A hardness is 55 to 59
Poor: Shore A hardness is 60 or more.

### [Melt flow rate: MFR]

The melt flow rate was measured at 230°C under a load of 10 kgf or 2.16 kgf in accordance with JIS K7210.

### [Vacuum formability]

Samples were formed into shape of an instrument panel (forming temperature: 125°C), and evaluated for corner transferability and grain retention ability using a vacuum forming machine BVF-1010-PWB manufactured by Fu-se Vacuum Forming Ltd. according to the following criteria.

### (Evaluation criteria of corner transferability)

Excellent: a corner of a formed product is very sharp.
Good: a corner of a formed product is sharp.
Moderate: a corner of a formed product is slightly rounded.
Poor: a corner of a formed product is rounded.

### (Evaluation criteria of grain retention ability)

Excellent: a transferred grain on a formed product remains very clearly.
Good: a transferred grain on a formed product remains clearly.
Moderate: a part of a transferred grain on a formed product is unclear.
Poor: a part of a transferred grain on a formed product almost disappears.

### [Roll processability]

Releasability from a roll was evaluated according to the following test conditions and evaluation criteria.

### (Test conditions)

Apparatus name: No.191-TM/WM Test mixing roll manufactured by YASUDA SEIKI SEISAKUSHO, LTD.
Roll temperature: 180°C
Number of Revolution: 5 inch, front 12.2 / rear 15.3 rpm
Amount of sample: 100 g
Kneading time: 10 minutes
Film thickness: 0.5 mmt
Guide width: 21 cm

### (Evaluation criteria of releasability)

Excellent: A sample is easily released by its own weight.
Good: A sample is easily released by applying some load.
Moderate: A sample is released while having some adhesion to a roll.
Poor: A sample strongly adheres to a roll and is not released or hardly released.

### [Examples 1 to 4 and Comparative Examples 1 to 7]

### Used materials

(1) The following material was used as the ethylene-based copolymer rubber (A).
   Ethylene-propylene-diene copolymer rubber (EPDM) (product name: 3072EPM; manufactured by Mitsui Chemicals, Inc., ethylene content = 64 mass%, diene content = 5.4 mass%, Mooney viscosity ML (1+4) 125°C = 51, amount of extender oil = 40(PHR))
(2) The following material was used as the polypropylene resin (B).
   (a) Propylene/ethylene random copolymer (crystalline resin) (product name: Prime Polypro B241, manufactured by Prime Polymer Co., Ltd., density: 0.91 g/cm³, MFR (temperature: 230°C, load: 2.16 kg): 0.5 g/10 min, melting point measured by DSC: 140°C, density 0.91 g/cm³)
   (b) Propylene-ethylene block copolymer (product name: EL-Pro P740J; manufactured by SCG Chemicals Co., Ltd., MFR (ASTM D1238-65T; 230°C, load 2.16 kg) 27 g/10 min, melting point measured by DSC: 163°C)
(3) The following material was used as the butyl rubber.
   1:1 master batch product of butyl rubber (product name: IIR065; manufactured by Exxon Mobil Chemical Company, unsaturation degree: 0.8 mol%, Mooney viscosity ML (1+8) 125°C: 32) and propylene-ethylene block copolymer (product name: EL-Pro P740J; manufactured by SCG Chemicals Co., Ltd., MFR (ASTM D1238-65T; 230°C, load 2.16 kg) 27 g/10 min, melting point 163°C)
(4) The following material was used as the propylene-ethylene copolymer.
   VERSIFY^{™} 2400.05, manufactured by The Dow Chemical Company (melt flow rate (230°C, load 2.16 kg) 2 g/10 min, density 863 kg/m³), content of the component having a weight average molecular weight of 1.0×10⁵ or more is 1.0%, content of the component having a weight average molecular weight of 5.0×10⁴ or less is 2.5%, melting point 51.8°C
(5) The following material was used as the styrene-based thermoplastic elastomer (C).
   ToughTech^{™} H1272 manufactured by Asahi Kasei Corporation having structure of polystyrene-hydrogenated polybutadiene-polystyrene, 35 mass% of bound styrene and number average molecular weight of about 120000, (35 mass% paraffin-based oil-extended product (amount of extender oil = 56 (PHR)) (Diana Process Oil PW-380 manufactured by Idemitsu Kosan Co., Ltd. [paraffin-based process oil, kinematic viscosity: 381.6 cst (40°C), 30.1 (100°C), average molecular weight 746, ring analysis value: CA=0%, CN=27%, CP=73%]))

### (Example 1)

50 parts by mass of ethylene-propylene-diene copolymer rubber (EPDM) (product name: 3072EPM: manufactured by Mitsui Chemicals, Inc., ethylene content = 64 mass%, diene content = 5.4 mass%, Mooney viscosity ML (1+4) 125°C = 51, amount of extender oil = 40 (PHR)), 10 parts by mass of propylene/ethylene random copolymer (crystalline resin) (product name: Prime Polypro B241, manufactured by Prime Polymer Co., Ltd., density: 0.91 g/cm³, MFR (temperature: 230°C, load: 2.16 kg): 0.5 g/10 min, density 0.91 g/cm³), 10 parts by mass of styrene-based thermoplastic elastomer (ToughTech^{™} H1272 manufactured by Asahi Kasei Corporation, 35 mass% paraffin-based oil-extended product (amount of extender oil = 56(PHR)), 30 parts by mass of softening agent (product name: Diana Process Oil PW-100 manufactured by Idemitsu Kosan Co., Ltd., paraffin oil), 0.40 parts by mass of organic peroxide (PERHEXA 25B, manufactured by NOF CORPORATION) as a crosslinking agent, and 0.40 parts by mass of divinylbenzene as a crosslinking aid were sufficiently mixed by Henschel mixer, then the obtained mixture was dynamically cross-linked using an extruder (product number: KTX-30, manufactured by Kobe Steel, Ltd., cylinder temperature: C1:50°C, C2:90°C, C3:100°C, C4:120°C, C5:180°C, C6:200°C, C7-C14:200°C, die temperature: 200°C, screw revolution: 400 rpm, extrusion rate: 50 kg/h) to obtain the pellets of the resin composition. The formulations and results are shown in Table 1.

### (Examples 2 and 3)

The pellets of the resin composition were obtained in a similar way to Example 1 except that the amounts of components to be added were changed according to Table 1. The results are shown in Table 1.

### (Example 4)

The pellets of the resin composition were obtained in a similar way to Example 1 except that the amounts of components to be added were changed according to Table 1 and that the styrene-based thermoplastic elastomer was added after crosslinking treatment.

Specifically, 36 parts by mass of ethylene-propylene-diene copolymer rubber (EPDM) (product name: 3072EPM, manufactured by Mitsui Chemicals, Inc., ethylene content = 64 mass%, diene content = 5.4 mass%, Mooney viscosity ML (1+4) 125°C = 51, amount of extender oil = 40(PHR)), 10 parts by mass of propylene/ethylene random copolymer (crystalline resin) (product name: Prime Polypro B241, manufactured by Prime Polymer Co., Ltd., density: 0.91 g/cm³, MFR (temperature: 230°C, load: 2.16 kg): 0.5 g/10 min, density 0.91 g/cm³), 46 parts by mass of softening agent (product name: Diana Process Oil PW-100 manufactured by Idemitsu Kosan Co., Ltd., paraffin oil), 0.40 parts by mass of organic peroxide (PERHEXA 25B, manufactured by NOF CORPORATION) as a crosslinking agent, and 0.40 parts by mass of divinylbenzene as a crosslinking aid were sufficiently mixed by Henschel mixer, then the obtained mixture was dynamically cross-linked using an extruder (product number: KTX-30, manufactured by Kobe Steel, Ltd., cylinder temperature: C1:50°C, C2:90°C, C3:100°C, C4:120°C, C5:180°C, C6:200°C, C7-C14:200°C, die temperature: 200°C, screw revolution: 400 rpm, extrusion rate: 50 kg/h) to obtain the pellets. Then, the obtained pellets and styrene-based thermoplastic elastomer (ToughTech^{™} H1272 manufactured by Asahi Kasei Corporation, 35 mass% paraffin-based oil-extended product (amount of extender oil = 56(PHR)) were mixed so that the components are formulated in amounts shown in Table 1 using the same extruder to obtain the pellets of the resin composition. The results are shown in Table 1.

### (Comparative Example 1)

60 parts by mass of ethylene-propylene-diene copolymer rubber (EPDM) (product name: 3072EPM, manufactured by Mitsui Chemicals, Inc., ethylene content = 64 mass%, diene content = 5.4 mass%, Mooney viscosity ML (1+4) 125°C = 51, amount of extender oil = 40(PHR)), 29 parts by mass of 1:1 master batch product of butyl rubber (product name: IIR065; manufactured by Exxon Mobil Chemical Company, unsaturation degree: 0.8 mol%, Mooney viscosity ML (1+8) 125°C: 32) and propylene-ethylene block copolymer (product name: EL-Pro P740J; SCG Chemicals Co., Ltd., MFR (ASTM D1238-65T; 230°C, load 2.16 kg) 27 g/10 min, melting point 163°C), 11 parts by mass of softening agent (product name: Diana Process Oil PW-100 manufactured by Idemitsu Kosan Co., Ltd., paraffin oil), 0.3 parts by mass of organic peroxide (PERHEXA 25B, manufactured by NOF CORPORATION) as a crosslinking agent, and 0.2 parts by mass of divinylbenzene as a crosslinking aid were sufficiently mixed by Henschel mixer, then the obtained mixture was dynamically cross-linked using an extruder (product number: KTX-30, manufactured by Kobe Steel, Ltd., cylinder temperature: C1:50°C, C2:90°C, C3:100°C, C4:120°C, C5:180°C, C6:200°C, C7-C14:200°C, die temperature: 200°C, screw revolution: 400 rpm, extrusion rate: 50 kg/h) to obtain the pellets of the resin composition. The formulations and results are shown in Table 2.

### (Comparative Example 2)

55 parts by mass of ethylene-propylene-diene copolymer rubber (EPDM) (product name: 3072EPM, manufactured by Mitsui Chemicals, Inc., ethylene content = 64 mass%, diene content = 5.4 mass%, Mooney viscosity ML (1+4) 125°C = 51, amount of extender oil = 40(PHR)), 16 parts by mass of propylene-ethylene block copolymer (product name: EL-Pro P740J; SCG Chemicals Co., Ltd., melt flow rate (ASTM D1238-65T; 230°C, load 2.16 kg) 27 g/10 min, melting point 163°C), 8 parts by mass of propylene-ethylene copolymer (product name: VERSIFY^{™} 2400.05, manufactured by The Dow Chemical Company, melt flow rate (230°C, load 2.16 kg) 2 g/10 min, density 863 kg/m³), 21 parts by mass of softening agent (product name: Diana Process Oil PW-100 manufactured by Idemitsu Kosan Co., Ltd., paraffin oil), 0.25 parts by mass of organic peroxide (PERHEXA 25B, manufactured by NOF CORPORATION) as a crosslinking agent, and 0.15 parts by mass of divinylbenzene as a crosslinking aid were sufficiently mixed by Henschel mixer, then the obtained mixture was dynamically cross-linked using an extruder (product number: KTX-30, manufactured by Kobe Steel, Ltd., cylinder temperature: C1:50°C, C2:90°C, C3:100°C, C4:120°C, C5:180°C, C6:200°C, C7-C14:200°C, die temperature: 200°C, screw revolution: 400 rpm, extrusion rate: 50 kg/h) to obtain the pellets of the resin composition. The formulations and results are shown in Table 2.

### (Comparative Example 3)

28 parts by mass of ethylene-propylene-diene copolymer rubber (EPDM) (product name: 3072EPM, manufactured by Mitsui Chemicals, Inc., ethylene content = 64 mass%, diene content = 5.4 mass%, Mooney viscosity ML (1+4) 125°C = 51, amount of extender oil = 40(PHR)), 13 parts by mass of propylene/ethylene random copolymer (crystalline resin) (product name: Prime Polypro B241, manufactured by Prime Polymer Co., Ltd., density: 0.91 g/cm³, MFR (temperature: 230°C, load: 2.16 kg): 0.5 g/10 min, density 0.91 g/cm³), 25 parts by mass of styrene-based thermoplastic elastomer (ToughTech^{™} H1272 manufactured by Asahi Kasei Corporation, 35 mass% paraffin-based oil-extended product (amount of extender oil = 56(PHR)), 34 parts by mass of softening agent (product name: Diana Process Oil PW-100 manufactured by Idemitsu Kosan Co., Ltd., paraffin oil), 0.40 parts by mass of organic peroxide (PERHEXA 25B, manufactured by NOF CORPORATION) as a crosslinking agent, and 0.40 parts by mass of divinylbenzene as a crosslinking aid were sufficiently mixed by Henschel mixer, then the obtained mixture was dynamically cross-linked using an extruder (product number: KTX-30, manufactured by Kobe Steel, Ltd., cylinder temperature: C1:50°C, C2:90°C, C3:100°C, C4:120°C, C5:180°C, C6:200°C, C7-C14:200°C, die temperature: 200°C, screw revolution: 400 rpm, extrusion rate: 50 kg/h) to obtain the pellets of the resin composition. The formulations and results are shown in Table 2.

### (Comparative Examples 4 to 7)

The pellets of the resin composition were obtained in a similar way to Comparative Example 1 except that components and the amounts of components to be added were changed according to Table 2. The results are shown in Table 2.

**[Table 1]**

| Formulation | Component | Example 1 | Example 2 | Example 3 | Example 4 |
|---|---|---|---|---|---|
| EPDM(A) | Mitsui EPT^{™} 3072EPM (amount of extender oil 40 PHR) | 50 | 49 | 48 | 36 |
| PP(B) | Prime Polypro^{™} B241 | 10 | 11 | 10 | 10 |
| | EL-Pro^{™} P740J | | | | |
| SEBS(C) | ToughTech^{™} H1272 (amount of extender oil 56 PHR) | 10 | 12 | 17 | 8 |
| Softening agent (D) | Diana Process Oil^{™} PW-100 | 30 | 28 | 25 | 46 |
| Butyl rubber (E) | Exxon^{™} butyl rubber IIR065 EL-Pro^{™} P740J | | | | |
| PER(F) | VERSIFY^{™} 2400.05 | | | | |
| Crosslinking agent | PERHEXA^{™} 25B | 0.40 | 0.40 | 0.40 | 0.40 |
| | Phenol resin cross-linking agent | | | | |
| Crosslinking aid | Divinylbenzene | 0.40 | 0.40 | 0.40 | 0.40 |
| | (A)+(B)+(C)+(D)+(E)+(F) Total | 100.0 | 100.0 | 100.0 | 100.0 |
| | | | | | |
| Calculated formulation ratio | | | | | |
| | Mitsui EPT (A) (excluding extender oil) | 36 | 35 | 34 | 26 |
| | Polypropylene (B) | 10 | 11 | 10 | 10 |
| | SEBS (C) (excluding extender oil) | 6 | 8 | 11 | 5 |
| | Softening agent (D) (injection oil + extender oil) | 48 | 46 | 45 | 59 |
| | Butyl rubber (E) | 0 | 0 | 0 | 0 |
| | PER (F) | 0 | 0 | 0 | 0 |
| | Crosslinking agent | 0.40 | 0.40 | 0.40 | 0.40 |
| | Crosslinking aid | 0.40 | 0.40 | 0.40 | 0.40 |
| | (A)+(B)+(C)+(D)+(E)+(F) Total | 100 | 100 | 100 | 100 |
| | (C)/(D) | 0.13 | 0.17 | 0.24 | 009 |
| Basic physical properties | | | | | |
| | A hardness (instantaneous value) | 45 | 41 | 39 | 47 |
| | M₁₀₀ (MPa): stress at 100% elongation | 1.3 | 1.0 | 0.9 | 1.1 |
| | T_{B} (MPa): tensile strength | 5.0 | 3.8 | 3.8 | 4.6 |
| | E_{B} (%): Elongation at break | 450 | 530 | 530 | 510 |
| | Weight change rate (80°C × 24 h) (%) | 100 | 104 | 110 | 130 |
| | MFR (230°C, 10 kgf) (g/10 min) | 11 | 37 | 45 | 35 |
| | MFR (230°C, 2.16 kgf) (g/10 min) | | | | |
| | | | | | |
| Oil resistance | Oil resistance | Excellent | Excellent | Excellent | Good |
| Softness | Softness (hardness) | Excellent | Excellent | Excellent | Good |
| Vacuum formability | Corner transferability | Excellent | Excellent | Excellent | Excellent |
| | Grain retention ability | Excellent | Excellent | Good | Good |
| Roll processability | Releasability from roll | Excellent | Excellent | Good | Good |

**[Table 2]**

| Formulation | Component | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|
| EPDM(A) | Mitsui EPT^{™} 3072EPM (amount of extender oil 40 PHR) | 60 | 55 | 28 | 35 | 56 | 50 | 15 |
| PP(B) | Prime Polypro^{™} B241 | | | 13 | 14 | 39 | | |
| | EL-Pro^{™} P740J | 13 | 16 | | | | 37 | 10 |
| SEBS(C) | ToughTech^{™} H1272 (amount of extender oil 56 PHR) | | | 25 | 5 | | 8 | 63 |
| Softening agent (D) | Diana Process Oil^{™} PW-100 | 11 | 21 | 34 | 46 | 5 | 5 | 12 |
| Butyl rubber (E) | Exxon^{™} butyl rubber IIR065 EL-Pro^{™} P740J | 16 | | | | | | |
| PER(F) | VERSIFY^{™} 2400.05 | | 8 | | | | | |
| Crosslinking agent | PERHEXA^{™} 25B | 0.30 | 0.30 | 0.40 | 0.40 | 0.40 | 0.40 | 0.40 |
| | Phenol resin cross-linking agent | | | | | | | |
| Crosslinking aid | Divinylbenzene | 0.20 | 0.20 | 0.40 | 0.40 | 0.40 | 0.40 | 0.40 |
| | (A)+(B)+(C)+(D)+(E)+(F) Total | 100.0 | 100.0 | 100.0 | 100.0 | 100.0 | 100.0 | 100.0 |
| | | | | | | | | |
| Calculated formulation ratio | | | | | | | | |
| | Mitsui EPT (A) (excluding extender oil) | 43 | 39 | 20 | 25 | 40 | 36 | 11 |
| | Polypropylene (B) | 13 | 16 | 13 | 14 | 39 | 37 | 10 |
| | SEBS (C) (excluding extender oil) | 0 | 0 | 16 | 3 | 0 | 5 | 40 |
| | Softening agent (D) (injection oil + extender oil) | 28 | 37 | 51 | 58 | 21 | 22 | 39 |
| | Butyl rubber (E) | 16 | 0 | 0 | 0 | 0 | 0 | 0 |
| | PER (F) | 0 | 8 | 0 | 0 | 0 | 0 | 0 |
| | Crosslinking agent | 0.30 | 0.30 | 0.40 | 0.40 | 0.40 | 0.40 | 0.40 |
| | Crosslinking aid | 0.20 | 0.20 | 0.40 | 0.40 | 0.40 | 0.40 | 0.40 |
| | (A)+(B)+(C)+(D)+(E)+(F) Total | 100 | 100 | 100 | 100 | 100 | 100 | 100 |
| | (C)/(D) | 0.00 | 0.00 | 0.31 | 0.06 | 0.00 | 0.23 | 1.04 |
| Basic physical properties | | | | | | | | |
| | A hardness (instantaneous value) | 58 | 58 | 49 | 45 | 86 | 80 | 30 |
| | M₁₀₀ (MPa): stress at 100% elongation | 1.2 | 1.4 | 1.2 | 1.0 | 3.9 | 3.2 | 0.5 |
| | T_{B} (MPa): tensile strength | 3.8 | 4.2 | 4.5 | 4.6 | 8.7 | 8.1 | 3.0 |
| | E_{B} (%): Elongation at break | 490 | 490 | 560 | 510 | 630 | 600 | 640 |
| | Weight change rate (80°C × 24 h) (%) | 250 | 200 | 145 | 150 | 130 | 106 | 260 |
| | MFR (230°C, 10 kgf) (g/10 min) | 6 | 11 | | 10 | 15 | 28 | |
| | MFR (230°C, 2.16 kgf) (g/10 min) | | | 0.9 | | | | 2 |
| | | | | | | | | |
| Oil resistance | Oil resistance | Poor | Poor | Moderate | Moderate | Good | Excellent | Poor |
| Softness | Softness (hardness) | Moderate | Moderate | Good | Excellent | Poor | Poor | Excellent |
| Vacuum formability | Corner transferability | Moderate | Poor | Excellent | Good | Good | Excellent | Excellent |
| | Grain retention ability | Good | Good | Poor | Good | Excellent | Excellent | Poor |
| Roll processability | Releasability from roll | Excellent | Excellent | Poor | Excellent | Good | Excellent | Poor |

From the results shown in Table 1 and Table 2, it can be seen that the compositions of Examples 1 to 3 has both soft touch and excellent oil resistance. Generally, it is considered that pellets having milky white hue is good and pellets having yellow-colored hue etc. is not preferable, and all of the pellets of the compositions of Examples 1 to 3 were milky white.

Comparative Examples 1 and 2 do not contain the styrene-based thermoplastic elastomer (C), and thus have inferior weight change rate (oil resistance). Comparative Example 3 shows that when the amount of the styrene-based thermoplastic elastomer (C) to be added is too large, oil resistance is lower, and grain retention ability and releasability from a roll get worse. Comparative Example 4 shows that when the amount of the styrene-based thermoplastic elastomer (C) to be added is too small, oil resistance and vacuum formability gets worse. Comparative Example 5 shows that in the case of a hard material to which larger amount of the polypropylene resin (B) has been added, oil resistance is somewhat good even if the styrene-based thermoplastic elastomer (C) is not added, but softness is poor. Comparative Example 6 shows that, when the styrene-based thermoplastic elastomer (C) is added to a hard material to which larger amount of the polypropylene resin (B) has been added, oil resistance is better but softness is worse. Comparative Example 7 shows that, when the amount of the styrene-based thermoplastic elastomer (C) to be added is larger than the softening agent, oil resistance gets worse.

## Claims

1. A composition comprising 20 to 60 parts by mass of a component derived from an ethylene-based copolymer rubber (A), 5 to 14 parts by mass of a component derived from a polypropylene resin (B), 5 to 12 parts by mass of a component derived from a styrene-based thermoplastic elastomer (C) and 5 to 70 parts by mass of a component derived from a softening agent (D) (with the total amount of the components (A), (B), (C) and (D) being 100 parts by mass), wherein a mass ratio of the component derived from the styrene-based thermoplastic elastomer (C) to the component derived from the softening agent (D) ((C)/(D)) is 0.01 to 1, and at least the component derived from the ethylene-based copolymer rubber (A) and the component derived from the styrene-based thermoplastic elastomer (C) are crosslinked by a crosslinking agent (E) comprising an organic peroxide.

2. The composition according to claim 1, wherein the styrene-based thermoplastic elastomer (C) is selected from a block copolymer of styrene with one or more conjugated dienes selected from butadiene and isoprene, and a hydrogenated product thereof.

3. The composition according to claim 1 or 2, wherein the crosslinking agent (E) consists of an organic peroxide.

4. The composition according to any one of claims 1 to 3, having an MFR of 0.1 to 150 at 230°C under a load of 10 kg.

5. A skin member of an automobile interior part, comprising the composition according to any one of claims 1 to 4.

6. An automobile interior part having the skin member according to claim 5.

7. The automobile interior part according to claim 6, wherein the automobile interior part is an instrument panel or a door trim.

## Patentansprüche

1. Zusammensetzung, umfassend 20 bis 60 Masseteile einer Komponente, die von einem ethylenbasierten Copolymerkautschuk (A) stammt, 5 bis 14 Masseteile einer Komponente, die von einem Polypropylenharz (B) stammt, 5 bis 12 Masseteile einer Komponente, die von einem styrolbasierten thermoplastischen Elastomer (C) stammt, und 5 bis 70 Masseteile einer Komponente, die von einem Weichmacher (D) stammt (wobei die Gesamtmenge der Komponenten (A), (B), (C) und (D) 100 Massenteile beträgt), wobei ein Massenverhältnis von der Komponente, die von dem styrolbasierten thermoplastischen Elastomer (C) stammt, zu der Komponente, die von dem Weichmacher (D) stammt, ((C)/(D)) 0,01 bis 1 beträgt und mindestens die Komponente, die von dem ethylenbasierten Copolymerkautschuk (A) stammt, und die Komponente, die von dem styrolbasierten thermoplastischen Elastomer (C) stammt, mittels eines Vernetzungsmittels (E), das ein organisches Peroxid umfasst, vernetzt sind.

2. Zusammensetzung gemäß Anspruch 1, wobei das styrolbasierte thermoplastische Elastomer (C) aus einem Blockcopolymer von Styrol mit einem oder mehreren konjugierten Dienen, ausgewählt aus Butadien und Isopren, und einem hydrierten Produkt davon ausgewählt ist.

3. Zusammensetzung gemäß Anspruch 1 oder 2, wobei das Vernetzungsmittel (E) aus einem organischen Peroxid besteht.

4. Zusammensetzung gemäß einem der Ansprüche 1 bis 3, die einen MFR von 0,1 bis 150 bei 230°C mit einer Last von 10 kg aufweist.

5. Außenhautelement eines Kraftfahrzeuginnenteils, umfassend die Zusammensetzung gemäß einem der Ansprüche 1 bis 4.

6. Kraftfahrzeuginnenteil, umfassend das Außenhautelement gemäß Anspruch 5.

7. Kraftfahrzeuginnenteil gemäß Anspruch 6, wobei das Kraftfahrzeuginnenteil ein Armaturenbrett oder eine Türverkleidung ist.

## Revendications

1. Composition comprenant 20 à 60 parties en masse d'un composant dérivé d'un caoutchouc (A) de copolymère d'éthylène, 5 à 14 parties en masse d'un composant dérivé d'une résine (B) de polypropylène, 5 à 12 parties en masse d'un composant dérivé d'un élastomère (C) thermoplastique à base de styrène et 5 à 70 parties en masse d'un composant dérivé d'un agent (D) adoucissant (la quantité totale des composants (A), (B), (C) et (D) étant de 100 parties en masse), dans laquelle un rapport massique du composant dérivé de l'élastomère (C) thermoplastique à base de styrène sur le composant dérivé de l'agent (D) adoucissant ((C)/(D)) est de 0,01 à 1, et au moins le composant dérivé du caoutchouc (A) de copolymère d'éthylène et le composant dérivé de l'élastomère (C) thermoplastique à base de styrène sont réticulés par un agent (E) de réticulation comprenant un peroxyde organique.

2. Composition selon la revendication 1, dans laquelle l'élastomère (C) thermoplastique à base de styrène est sélectionné parmi un copolymère à bloc de styrène avec un ou plusieurs diènes conjugués sélectionnés parmi le butadiène et l'isoprène, et un produit hydrogéné de ceux-ci.

3. Composition selon la revendication 1 ou la revendication 2, dans laquelle l'agent (E) de réticulation consiste en un peroxyde organique.

4. Composition selon l'une quelconque des revendications 1 à 3, présentant un MFR de 0,1 à 150 à 230 °C sous une charge de 10 kg.

5. Élément d'habillage d'une pièce intérieure d'automobile, comprenant la composition selon l'une quelconque des revendications 1 à 4.

6. Pièce intérieure d'automobile présentant l'élément d'habillage selon la revendication 5.

7. Pièce intérieure d'automobile selon la revendication 6, dans laquelle la partie intérieure d'automobile est un tableau de bord ou une garniture de porte.
